# EUROPÄISCHE PATENTSCHRIFT

(11) **EP 4 124 205 B1**
(45) Veröffentlichungstag und Bekanntmachung des Hinweises auf die Patenterteilung: **01.05.2024**
(21) Anmeldenummer: 20714507.9
(22) Anmeldetag: 20.03.2020
(51) Int. Cl.: G01J 3/02, G01J 3/10, G01J 1/04, G02B 27/28, G02F 1/01, G01J 1/02

(54) **LASER-LEISTUNGSBEGRENZUNGSVORRICHTUNG**
APPARATUS FOR LIMITING LASER POWER
APPAREIL DE LIMITATION DE PUISSANCE LASER

(43) Veröffentlichungstag der Anmeldung: 01.02.2023
(73) Patentinhaber: Gecko Analysentechnik GmbH, 85630 Grasbrunn (DE)
(72) Erfinder: EBLE, Matthias, Baldham (DE); WEISE, Michael, Berlin (DE); SEEGER, Stefan, Berlin (DE)
(74) Vertreter: SSM Sandmair
(86) Internationale Anmeldenummer: PCT/EP2020/057769
(87) Internationale Veröffentlichungsnummer: WO 2021/185453

(56) Entgegenhaltungen:
- EP-A2- 0 534 083
- DE-A1- 19 528 094
- US-A- 3 834 793
- US-A1- 2006 132 905
- US-A1- 2006 132 906

## Beschreibung

Die vorliegende Erfindung betrifft eine Vorrichtung und ein Verfahren zur Leistungsbegrenzung eines Lasers, mittels welcher die Leistung eines von einer Reflexionseinrichtung reflektierten Laserstrahls gegenüber der Leistung des auf die Reflexionseinrichtung einfallenden Laserstrahls verringert wird, sobald die Leistung des einfallenden Laserstrahls über einer vordefinierten Schwelle liegt.

Laserspektroskopische Verfahren finden auf einer Vielzahl von technischen Gebieten Anwendung und dienen der Untersuchung von unterschiedlichsten Gegenständen, einschließlich Gasen. Dabei werden Elektronen der Elektronenhülle des zu untersuchenden Stoffes mit Hilfe der durch den Laserstrahl bereitgestellten Energie auf ein höheres Energieniveau angehoben. Der dabei von den Elektronen absorbierte Energieanteil kann mittels geeigneter Detektoren ebenso gemessen werden, wie die Energie, welche beim Zurückfallen der Elektronen auf ein niedrigeres, stabiles Niveau emittiert wird, was letztendlich Rückschlüsse auf den oder die Bestandteile des zu untersuchenden Stoffes zulässt.

Bei einigen Untersuchungen ist es allerdings wünschenswert, in manchen Fällen sogar unerlässlich, dass die über den Laserstrahl in den zu untersuchenden Stoff eingetragene Energie unterhalb einer vordefinierten Grenze liegt. Dies ist beispielsweise bei der Untersuchung von (hoch-)explosiven Gasen der Fall. Beim Einsatz von Dioden als Pumpquelle des Lasers steht man allerdings vor dem Problem, dass diese am Ende ihrer Lebensdauer schlagartig "sterben" und dabei eine Leistung abgeben können, die bis zu zehnmal höher ist als ihre Nennleistung. Da, wie bei allen technischen Bauteilen, die Lebensdauer nicht exakt hervorsagbar ist und solche Dioden darüber hinaus unvermittelt ausfallen, müssen bei sicherheitsrelevanten Anwendungen solcher Laser Vorkehrungen getroffen werden, um durch plötzliche Leistungsspitzen verursachte Schäden zu verhindern. Solche Schäden können ebenso durch Spannungsspitzen in der Stromversorgung eines Lasers verursacht werden, wie sie beispielsweise bei Blitzeinschlägen auftauchen.

Bei der Untersuchung von vergleichsweise schwer entzündlichen Gegenständen wie etwa Festkörpern können beispielsweise Abschalteinrichtungen vorgesehen werden, welche die Laserquelle abschalten, sobald eine zu hohe abgegebene Leistung gemessen wird. Für die Untersuchung von hochexplosiven Gasgemischen sind solche Abschalteinrichtungen jedoch regelmäßig zu "träge", sodass bereits eine zu hohe Energie in das Gasgemisch eingetragen worden wäre, bevor mit einer Abschaltung der Laserquelle reagiert werden kann. In solchen Fällen besteht daher nur die Möglichkeit, kleine Proben des zu untersuchenden Gases mittels Laserspektroskopie zu untersuchen, sodass ein Entzünden des Gases, etwa beim Ausfall einer Pumpdiode des Lasers, keine Schäden zur Folge hat. Das Dokument EP0534083A2 offenbart eine Laser-Leistungsbegrenzungsvorrichtung mit einer im optischen Pfad eines Laserstrahls angeordneten Reflexionseinrichtung.

Die Untersuchung von hochexplosiven Gasen in laufenden Prozessen mittels Laserspektroskopie war aufgrund der oben dargelegten Problematiken bislang jedoch nicht möglich.

Ziel der vorliegenden Erfindung ist es demnach, eine Möglichkeit bereitzustellen, eine gegebenenfalls zu hohe Leistung eines Laserstrahls reaktionsschnell zu reduzieren oder gar abzuschalten, sodass dessen Einsatz auch für sensible Anwendungen, etwa für die Laserspektroskopie von laufenden Prozessen eines hochexplosiven Gases möglich ist.

Diese Aufgabe wird durch den Gegenstand der nebengeordneten Patentansprüche 1, 14 und 15 gelöst. Die Unteransprüche definieren dabei bevorzugte Ausführungsform der vorliegenden Erfindung.

Ein erster Aspekt der vorliegenden Erfindung betrifft eine Laser-Leistungsbegrenzungsvorrichtung mit einer im optischen Pfad eines Laserstrahls, insbesondere eines Laserstrahls einer vordefinierten Wellenlänge angeordneten

Reflexionseinrichtung, die als ein Schichtstapel ausgebildet ist, wobei der Schichtstapel
- eine ein Material mit einem Metall-Isolator-Übergang aufweisende oder aus diesem Material bestehende Schaltschicht und
- eine im optischen Pfad des Laserstrahls der Schaltschicht nachgelagerte Reflexionsschicht und
- eine im optischen Pfad des Laserstrahls der Schaltschicht vorgelagerte, auf diese aufgebrachte und den Schichtstapel abschließende Entspiegelungsschicht,
umfasst, wobei die Reflexionseinrichtung so ausgestaltet ist, dass eine über einer vordefinierten Schwelle liegende Leistung des auf die Reflexionseinrichtung einfallenden Laserstrahls eine Änderung des Brechungsindexes des Materials in der Schaltschicht bewirkt, und sich so die Leistung des von der Reflexionseinrichtung reflektierten Laserstrahls gegenüber der Leistung des auf die Reflexionseinrichtung einfallenden Laserstrahls aufgrund einer verminderten Reflexion durch die Reflexionseinrichtung verringert.

Mit anderen Worten weist die erfindungsgemäße Vorrichtung zumindest eine Reflexionseinrichtung auf, an welcher der von einer Laserquelle emittierte Laserstrahl reflektiert wird, um im Anschluss daran einem Ziel zugeführt zu werden. Die zumindest eine Reflexionseinrichtung ist somit der Laserquelle und dem Ziel des Laserstrahls zwischengeschaltet, wobei es grundsätzlich und vorstellbar ist, dass mehrere hintereinandergeschaltete Reflexionseinrichtungen den Laserstrahl nacheinander reflektieren. Die Reflexionseinrichtung umfasst dabei zumindest eine Schaltschicht und zumindest eine Reflexionsschicht, welche auf der Seite der zumindest einen Schaltschicht angeordnet ist, welche dem auf die Reflexionseinrichtung einfallenden Laserstrahl abgewandt ist.

Die Schaltschicht umfasst oder besteht aus einem Material, welches einen Metall-Isolator-Übergang aufweist, also unterschiedliche, durch einen sogenannten Phasenübergang getrennte Eigenschaften aufweisen kann, insbesondere hinsichtlich des Brechungsindexes bzw. des Reflexionsvermögens. Sobald der Zustand des Materials den Phasenübergang über- bzw. unterschreitet, ändern sich folglich auch die Eigenschaften des Materials.

Diesen quantenmechanischen Effekt macht sich die vorliegende Erfindung bei der Leistungsbegrenzung von Laserstrahlen zunutze. Solange sich das den Metall-Isolator-Übergang aufweisende Material in einer Art Grundzustand befindet, welcher beispielsweise bei Raumtemperatur vorliegen kann, kann das Material einen Brechungsindex aufweisen, der ein vergleichsweise hohes Reflexionsvermögen der Reflexionseinrichtung zur Folge hat. Sobald das Material allerdings durch einen Laserstrahl unzulässig hoher Leistung angeregt wird, ändert sich dessen Brechungsindex, was letztendlich Auswirkung auf das Reflexionsvermögen der Reflexionseinrichtung hat. Die Reflexionseinrichtung der vorliegenden Erfindung ist also dazu ausgestaltet, dass ein Laser mit einer unzulässig hohen Leistung, insbesondere mit einer auf eine vordefinierte Fläche der Reflexionseinrichtung bezogenen Leistung das Material in der Schaltschicht dergestalt anregt dass dessen Reflexionsvermögen abnimmt, sein Absorptionsvermögen hingegen zunimmt. Die Leistung des von der Reflexionseinrichtung reflektierten Laserstrahls kann durch Anregung des Materials in der Schaltschicht also in entscheidendem Maße verringert werden, bis hin zu einer im Wesentlichen vollständigen Absorption der Laserleistung durch die Reflexionseinrichtung. Da diese Effekte innerhalb kürzester Zeit eintreten, eignet sich die erfindungsgemäße Vorrichtung besonders gut für Anwendungen, bei welchen eine besonders reaktionsschnelle Leistungsreduzierung oder gar - abschaltung eines Lasers vonnöten ist.

Gemäß der Erfindung ist die Reflexionseinrichtung als ein Stapel mehrerer übereinander angeordneter und einander kontaktierender Schichten ausgestaltet. Dabei können eine, mehrere oder alle Schichten dieses Schichtstapels mittels eines Beschichtungsverfahrens auf die jeweils unterhalb liegende Schicht aufgebracht sein, im Speziellen mittels sogenannten "Sputterns". Auf diese Weise lassen sich Schichten im für die vorliegende Erfindung notwendigen Nanometerbereich erzeugen. Im Einzelnen kann auf ein sogenanntes Substrat bzw. eine Trägerstruktur eine Vielzahl von unterschiedlichen Schichten gewünschter Dicke aufgebracht werden, welche die zur Lösung der erfindungsgemäßen Aufgabe gewünschten Eigenschaften aufweisen.

Gemäß einer weiteren Ausführungsform der vorliegenden Erfindung wird die verminderte Reflexion durch die Reflexionseinrichtung durch einen Phasenübergang des Materials, insbesondere durch einen Übergang von einem Metall-Zustand zu einem Isolator-Zustand des Materials bewirkt. Grundsätzlich kann sich die vorliegende Erfindung jeder Änderung beliebiger Materialeigenschaften des einen Metall-Isolator-Übergang aufweisenden Materials bedienen, ohne dass ein (vollständiger) Phasenübergang vollzogen werden muss.

Auch kann sich die Erfindung jeglicher Art von Anregung des einen Metall-Isolator-Übergang aufweisenden Materials bedienen, welche eine Änderung des Brechungsindexes bzw. des Reflexions-/ Absorptionsvermögens des Materials bewirkt. Gemäß einer Ausführungsform ist die Änderung des Brechungsindexes bzw. des Absorptions-/Reflexionsvermögens des Materials, insbesondere ein entsprechender Phasenübergang des Materials temperaturinduziert und/oder photoinduziert. Auf diese Weise ist es möglich, durch Erwärmung bzw. Abkühlen der Schaltschicht bzw. durch "Bestrahlen" der Schaltschicht mittels des Lasers eine gewünschte Änderung der Materialeigenschaften zu bewirken.

In einer bevorzugten Ausführungsform ist die Leistungsbegrenzungsvorrichtung so ausgestaltet, dass die Änderung des Brechungsindexes bzw. des Reflexions-/Absorptionsvermögens des Materials im Wesentlichen durch die mittels des Laserstrahls in die Schaltschicht eingebrachte Energie bewirkt wird. Mit anderen Worten ist in einem solchen Fall also keine zusätzliche Einrichtung zur Anregung der Schaltschicht und des darin befindlichen Materials notwendig. Die Leistungsbegrenzungsvorrichtung kann demnach allein durch den Laserstrahl selbst "geschaltet" werden.

Es ist jedoch ebenso vorstellbar, zusätzliche, zur Anregung des Materials in der Schaltschicht ausgestaltete Einrichtungen vorzusehen, beispielsweise eine Heizeinrichtung. Diese kann das Material in der Schaltschicht bereits zu einem gewissen Grad anregen, sodass dieses in einem gewünschten Zustand, etwa nahe eines Phasenübergangs vorliegt. Somit ist nur noch ein geringer Energieeintrag durch den Laser notwendig, um eine gewünschte Änderung der Materialeigenschaften zu bewirken. In gewissen Anwendungsfällen kann durch eine solche zusätzliche (Heiz-)Einrichtung die Sensibilität der Schaltschicht bzw. der Reflexionseinrichtung gesteigert werden.

Gemäß einer weiteren Ausführungsform der vorliegenden Erfindung ist das den Metall-Isolator-Übergang aufweisende Material Vanadium(IV)-oxid (VO₂).

Für manche Anwendungsfälle kann anstelle einer einzigen Schaltschicht und einer einzigen Reflexionsschicht eine Mehrzahl von Schaltschichten und Reflexionsschichten vorgesehen sein, die in der Art eines Bragg-Spiegels eine Reflexion des Laserstrahls bewirken. Die sich mit den Schaltschichten abwechselnden Reflexionsschichten können hierbei ein Material aufweisen oder aus diesem bestehen, welches einen niedrigeren Brechungsindex als das den Metall-Isolator-Übergang aufweisendes Material haben, insbesondere wenn dieses im Metall-Zustand vorliegt. Im Speziellen können die Reflexionsschichten Siliziumdioxid (SiO₂) und/oder Titandioxid (TiO₂) aufweisen oder darauf bestehen.

Grundsätzlich kann die zumindest eine Reflexionsschicht ein Metall umfassen oder aus diesem bestehen, insbesondere:
- Aluminium (Al);
- Palladium (Pd);
- Titan (Ti);
- Silber (Ag);
- Gold (Au).

Ferner ist es vorstellbar, dass die Reflexionsschicht mehrere Schichten unterschiedlicher Metalle aufweist, insbesondere kann der Hauptteil der Reflexionsschicht aus einem ersten Metall bestehen und, beispielsweise aus Haftungsgründen, zu beiden Seiten von Schichten eines anderen Metalls flankiert sein, welches besser an den daran angrenzenden Schichten des Schichtstapels anhaftet.

Gemäß der Erfindung weist die Reflexionseinrichtung zusätzlich zur zumindest einen Schaltschicht und der zumindest einen Reflexionsschicht eine Entspiegelungsschicht auf, welche oberhalb der Schaltschicht angeordnet ist, dieser im optischen Pfad des Laserstrahls also vorgelagert ist. Eine solche Entspiegelungsschicht kann zur Verbesserung der optischen Eigenschaften der Reflexionseinrichtung beitragen, kann jedoch auch aus Gründen der mechanischen Haltbarkeit der Reflexionseinrichtung bzw. des Schichtstapels vorgesehen sein. Insbesondere kann die Entspiegelungsschicht zumindest eines der folgenden Materialien umfassen oder aus einem dieser Materialien bestehen:
- Siliziumdioxid (SiO₂),
- Magnesiumoxid (MgO),
- Magnesiumfluorid (MgF₂).

Ferner kann die Reflexionseinrichtung auch ein oder mehrere Zwischenschichten aufweisen, insbesondere zwischen der Schaltschicht und der Reflexionsschicht und/oder zwischen der Reflexionsschicht und einer Trägerstruktur bzw. einem Substrat. Die zumindest eine Zwischenschicht kann zumindest eines der folgenden Materialien umfassen oder aus einem dieser Materialien bestehen:
- Siliziumdioxid (SiO₂),
- Magnesiumoxid (MgO),
- Magnesiumfluorid (MgF₂).

Solche Zwischenschichten können beispielsweise der Verbesserung optischer Eigenschaften der Reflexionseinrichtung dienen, aber auch einer verbesserten Wärmeleitung innerhalb der Reflexionseinrichtung, insbesondere der Abführung und/oder Verteilung von Wärme aus bzw. innerhalb der Reflexionseinrichtung.

Gemäß einer weiteren Ausführungsform ist die Leistungsbegrenzungsvorrichtung zur Leistungsbegrenzung einer für die Laserspektroskopie geeigneten Laserquelle, insbesondere eines VIS-Lasers oder NIR-Lasers, im Speziellen, eines Lasers mit einer Wellenlänge von 532 nm, 785 nm oder 1064 nm ausgestaltet.

Ein weiterer Aspekt der vorliegenden Erfindung betrifft die Verwendung einer Laser-Leistungsbegrenzungsvorrichtung gemäß einer der voranstehenden Ausführungsformen in einer Laserspektroskopievorrichtung oder für ein Laserspektroskopieverfahren.

Ein weiterer Aspekt der vorliegenden Erfindung betrifft ein Verfahren zur Leistungsbegrenzung eines Lasers mit folgenden Schritten:
- Bereitstellen einer einen Laserstrahl emittierenden Laserquelle, insbesondere einer eine Pumpdiode umfassenden Laserquelle;
- Anordnen einer Leistungsbegrenzungsvorrichtung gemäß einer der voranstehenden Ausführungsformen im optischen Pfad eines von der Laserquelle emittierten Laserstrahls, wobei die Reflexionseinrichtung der Leistungsbegrenzungsvorrichtung so ausgestaltet ist, dass eine über einer vordefinierten Schwelle liegende Leistung des auf die Reflexionseinrichtung einfallenden Laserstrahls eine Änderung des Brechungsindexes des Materials in der Schaltschicht der Reflexionseinrichtung bewirkt, und sich so die Leistung des von der Reflexionseinrichtung reflektierten Laserstrahls gegenüber der Leistung des auf die Reflexionseinrichtung einfallenden Laserstrahls aufgrund einer verminderten Reflexion durch die Reflexionseinrichtung verringert.

Gemäß einer Ausführungsform kann das Verfahren auf dem Gebiet der Laserspektroskopie durchgeführt werden, wobei der von der Reflexionseinrichtung reflektierte Laserstrahls zum Zwecke der Laserspektroskopie einem zu untersuchenden Gegenstand zugeführt wird.

Bevorzugte Ausführungsformen der vorliegenden Erfindung werden im Folgenden unter Bezugnahme auf die beiliegenden Figuren näher erläutert. Die vorliegende Erfindung kann sämtliche in der Figurenbeschreibung oder im allgemeinen Beschreibungsteil offenbarten Merkmale einzeln sowie in jedweder sinnvollen Kombination umfassen. Ebenso können im Zusammenhang mit einem erfindungsgemäßen Aspekt beschriebene Merkmale mit beliebigen anderen, im Zusammenhang mit einem anderen Aspekt beschriebenen Merkmalen kombiniert werden.

Es zeigen:
- Figur 1: eine schematische Darstellung des Aufbaus eines für die Laserspektroskopie geeigneten Systems;
- Figur 2: eine schematische Darstellung einer Reflexionseinrichtung bzw. eines Schichtstapels gemäß der vorliegenden Erfindung.

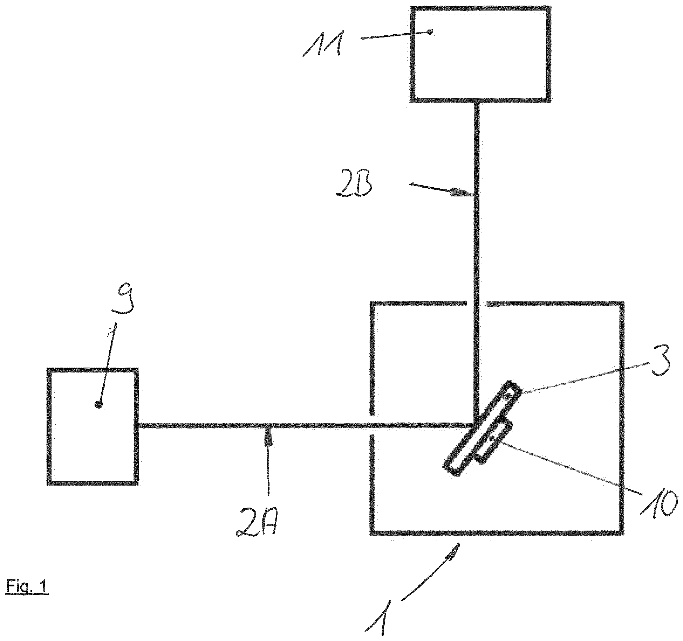

Der Figur 1 ist ein beispielhafter, schematisch dargestellter Aufbau eines Systems für die Laserspektroskopie zu entnehmen. Eine Laserquelle 9 emittiert hierbei einen Laserstrahl 2A mit einer vordefinierten Wellenlänge von 785 nm und einer im Wesentlichen vordefinierten Leistung. Bevor dieser Laserstrahl 2A auf einen mittels Laserspektroskopie zu untersuchenden Gegenstand 11 trifft, wird der Laserstrahl 2A an einer Reflexionseinrichtung 3 der erfindungsgemäßen Laser-Leistungsbegrenzungsvorrichtung 1 reflektiert. Solange die Leistung des auf den Gegenstand 11 treffenden Laserstrahls 2B unterhalb einer vordefinierten Schwelle von 35 mW liegt, findet eine im Wesentlichen ungehinderte Reflexion des Laserstrahls 2A an der Reflexionseinrichtung 3 statt. Der unmittelbar von der Reflexionseinrichtung 3 reflektierte Laserstrahl 2B weist demnach nahezu die gleiche Leistung auf wie der einfallende Laserstrahl 2A.

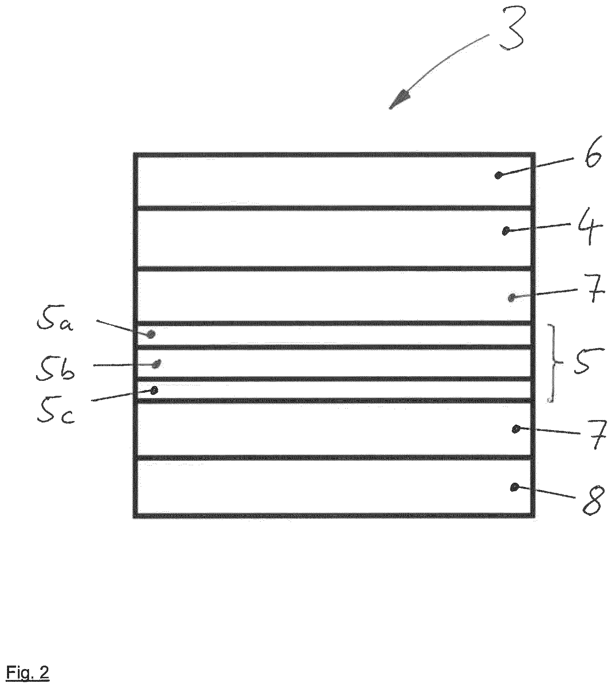

Die Figur 2 zeigt eine schematische Detailansicht der als Schichtstapel ausgestalteten Reflexionseinrichtung 3 aus der Figur 1, wobei der Laserstrahl 2A in der Darstellung der Figur 2 von oben auf die Reflexionseinrichtung 3 einfällt.

Der in der Figur 2 gezeigte Schichtstapel ist wie folgt aufgebaut: Als eine den gesamten Schichtstapel stützende Trägerstruktur 8 ist ein Silizium-Substrat mit einer Dicke im Bereich von 200 nm bis 0,7 mm (bevorzugt etwa 0,5 mm) vorgesehen, auf welches eine erste Zwischenschicht 7 aus Siliziumdioxid mit einer Dicke im Bereich von 50 nm bis 150 nm (bevorzugt etwa 140 nm) durch Sputtern aufgebracht ist. Auf diese Zwischenschicht 7 ist die Reflexionsschicht 5 aufgebracht, ebenfalls mittels Sputtern, welche im Wesentlichen aus einer Palladiumschicht 5B mit einer Dicke im Bereich von 50 nm bis 200 nm (bevorzugt etwa 150 nm) besteht, die zu beiden Seiten von Schichten 5A und 5C aus Titan flankiert ist, die eine Dicke im Bereich von 1 nm bis 5 nm (bevorzugt etwa 2 nm) bzw. im Bereich von 0,3 nm bis 0,7 nm (bevorzugt etwa 5 nm) aufweisen. Auf die Reflexionsschicht 5 folgt wiederum eine Zwischenschicht 7 aus Siliziumdioxid mit einer Dicke im Bereich von 120 nm bis 300 nm (bevorzugt etwa 282 nm), gefolgt von der Schaltschicht 4 aus Vanadium(IV)-oxid und einer Dicke im Bereich von 30 nm bis 150 nm (bevorzugt etwa 112 nm). Der Schichtstapel 3 wird durch die auf die Schaltschicht 4 aufgebrachte Entspiegelungsschicht 6 abgeschlossen, welche aus Siliziumdioxid besteht und eine Dicke im Bereich von 20 nm bis 80 nm (bevorzugt etwa 69 nm) aufweist.

Bei Raumtemperatur liegt das Vanadium(IV)-oxid der Schaltschicht 4 in einem Metall-Zustand vor und weist demnach ein vergleichsweise gutes Reflexionsvermögen auf. Die Reflexionseinrichtung 3 ist so ausgestaltet, dass, solange die Leistung des auf den Gegenstand 11 treffenden Laserstrahls 2B unterhalb einer vordefinierten Schwelle von 35 mW liegt, das Vanadium(IV)-oxid in seinem Metall-Zustand verbleibt und der Laserstrahl 2A von der Reflexionseinrichtung 3 ohne nennenswerte Verluste reflektiert wird und als reflektierter Laserstrahl 2B letztendlich auf den zu untersuchenden Gegenstand 11 trifft. Zwischen der Reflexionseinrichtung 3 und dem Gegenstand 11 ist zumindest ein Filter, insbesondere Graufilter (nicht dargestellt) im Strahlengang des Laserstrahls 2B angeordnet, welcher die Leistung des Laserstrahls 2B auf einen Wert unterhalb des Schwellwerts von 35 mW reduziert. Die für einen Phasenübergang in der Schaltschicht 4 notwendige Laserleistung ist im gezeigten Beispiel also an das Absorptionsvermögen des nachgeschalteten Filters angepasst und entsprechend höher.

Die Reflexionseinrichtung 3 ist ferner so ausgestaltet, dass eine über der vordefinierten Schwelle von 35 mW liegende Leistung des auf die Reflexionseinrichtung 3 einfallenden Laserstrahls 2A ausreichend Energie in die Schaltschicht 4 einträgt, dass dadurch ein Phasenübergang des Vanadium(IV)-oxids in der Schaltschicht 4 von einem Metall-Zustand zu einem Isolator-Zustand bewirkt wird. Jenseits dieses Phasenübergangs weist das Vanadium(IV)-oxid ein gegenüber dem Metall-Zustand wesentlich niedrigeres Reflexionsvermögen, allerdings auch ein wesentlich besseres Absorptionsvermögen auf. Der auf die Reflexionseinrichtung 3 treffende Laserstrahl 2A wird folglich durch die Reflexionseinrichtung 3, insbesondere die Schaltschicht 4 nahezu vollständig absorbiert, sodass praktisch kein reflektierter Laserstrahl 2B mehr vorliegt.

Mittels der erfindungsgemäßen Leistungsbegrenzungsvorrichtung 1 wird der Laserstrahl 2A also erfolgreich vom zu untersuchenden Gegenstand 11 ferngehalten, falls der Laserstrahl 2B eine unzulässig hohe Leistung von über 35 mW aufweist und hierdurch Schäden am Ort des zu untersuchenden Gegenstands 11 hervorrufen könnte.

Die erfindungsgemäße Vorrichtung und das erfindungsgemäße Verfahren sind grundsätzlich für die Leistungsbegrenzung sämtlicher Arten von Laserstrahlen geeignet. Ohne vom Grundprinzip der vorliegenden Erfindung abzuweichen, kann die Reflexionseinrichtung durch Anpassung der einzelnen Schichtdicken für beliebige Laser-Wellenlängen angepasst werden, ebenso wie an eine gewünschte Schwelle für die Leistung des Lasers, an welcher eine Änderung des Brechungsindexes, insbesondere ein Phasenübergang des Materials in der Schaltschicht 4 stattfindet. Darüber hinaus besteht durch die Variation einzelner Schichtdicken die Möglichkeit, die Schaltzeiten der Leistungsbegrenzungsvorrichtung bzw. die Trägheit der Schaltschicht 4 zu steuern.

Die Figur 1 zeigt ferner eine Heizeinrichtung 10, welche unterhalb des Substrats 8 angeordnet ist und Energie in die Schaltschicht 4 einbringt, um den Zustand des Materials in der Schaltschicht 4 nahe an dessen Phasenübergang zu bringen. Hierdurch wird die Sensibilität der Schaltschicht 4 erhöht, sodass nur ein geringer weiterer Energieeintrag über den Laserstrahl 2A notwendig ist, um einen Phasenübergang des Materials in der Schaltschicht 4 zu bewirken.

## Patentansprüche

1. Laser-Leistungsbegrenzungsvorrichtung (1) mit einer im optischen Pfad eines Laserstrahls (2A), insbesondere eines Laserstrahls (2A) einer vordefinierten Wellenlänge angeordneten Reflexionseinrichtung (3), die als ein Schichtstapel ausgebildet ist, wobei der Schichtstapel
- eine ein Material mit einem Metall-Isolator-Übergang aufweisende oder aus diesem Material bestehende Schaltschicht (4)
- eine im optischen Pfad des Laserstrahls (2A) der Schaltschicht (4) nachgelagerte Reflexionsschicht (5) und
- eine im optischen Pfad des Laserstrahls (2A) der Schaltschicht (4) vorgelagerte, auf diese aufgebrachte und den Schichtstapel abschließende Entspiegelungsschicht (6),
umfasst, wobei die Reflexionseinrichtung (3) so ausgestaltet ist, dass eine über einer vordefinierten Schwelle liegende Leistung des auf die Reflexionseinrichtung (3) einfallenden Laserstrahls (2A) eine Änderung des Brechungsindexes des Materials in der Schaltschicht (4) bewirkt, und sich so die Leistung des von der Reflexionseinrichtung (3) reflektierten Laserstrahls (2B) gegenüber der Leistung des auf die Reflexionseinrichtung (3) einfallenden Laserstrahls (2A) aufgrund einer verminderten Reflexion durch die Reflexionseinrichtung (3) verringert.

2. Laser-Leistungsbegrenzungsvorrichtung nach Anspruch 1, wobei die Reflexionseinrichtung (3) als ein Stapel mehrerer übereinander angeordneter und einander kontaktierender Schichten (4-7) ausgestaltet ist, insbesondere wobei eine, mehrere oder alle Schichten (4-7) der Reflexionseinrichtung (3) mittels eines Beschichtungsverfahrens auf die jeweils unterhalb liegende Schicht (4-7) aufgebracht ist, im Speziellen mittels eines Sputter-Verfahrens.

3. Laser-Leistungsbegrenzungsvorrichtung nach Anspruch 1 oder 2, wobei die verminderte Reflexion durch die Reflexionseinrichtung (3) durch einen Phasenübergang des Materials, insbesondere durch einen Übergang von einem Metall-Zustand zu einem Isolator-Zustand bewirkt wird.

4. Laser-Leistungsbegrenzungsvorrichtung nach einem der Ansprüche 1 bis 3, wobei die Änderung des Brechungsindexes, insbesondere der Phasenübergang des Materials temperaturinduziert und/oder photoinduziert ist.

5. Laser-Leistungsbegrenzungsvorrichtung nach einem der Ansprüche 1 bis 4, die dazu ausgestaltet ist, dass die Änderung des Brechungsindexes, insbesondere der Phasenübergang des Materials im Wesentlichen durch die mittels des Laserstrahls (2A) in die Schaltschicht (4) eingebrachte Energie bewirkt wird.

6. Laser-Leistungsbegrenzungsvorrichtung nach einem der Ansprüche 1 bis 4, mit ferner einer Heizeinrichtung (10), welche der Schaltschicht (4) Energie zuführt.

7. Laser-Leistungsbegrenzungsvorrichtung nach einem der Ansprüche 1 bis 6, wobei das Material Vanadium(IV)-oxid (VO₂) ist.

8. Laser-Leistungsbegrenzungsvorrichtung nach einem der Ansprüche 1 bis 7, mit einem Bragg-Spiegel, der mehrere Schichten mit dem Material umfasst, die sich mit Schichten mit zumindest einem weiteren Material abwechseln, dessen Brechungsindex sich vom Brechungsindex des Materials unterscheidet, insbesondere niedriger ist als der Brechungsindex des Materials im Metall-Zustand, wobei das zumindest eine weitere Material im Speziellen Siliziumdioxid (SiO₂) und/oder Titandioxid (TiO₂) ist.

9. Laser-Leistungsbegrenzungsvorrichtung nach einem der Ansprüche 1 bis 8, wobei die Reflexionsschicht (5) zumindest ein Metall umfasst oder aus diesem besteht, insbesondere:
- Aluminium (Al);
- Palladium (Pd);
- Titan (Ti);
- Silber (Ag);
- Gold (Au).

10. Laser-Leistungsbegrenzungsvorrichtung nach Anspruch 9, wobei die Reflexionsschicht (5) mehrere Schichten (5A, 5B, 5C) unterschiedlicher Metalle aufweist.

11. Laser-Leistungsbegrenzungsvorrichtung nach einem der Ansprüche 1 bis 10, wobei die Entspiegelungsschicht (6) zumindest eines der folgenden Materialien umfasst oder aus einem dieser Materialien besteht:
- Siliziumdioxid (SiO₂),
- Magnesiumoxid (MgO),
- Magnesiumfluorid (MgF₂).

12. Laser-Leistungsbegrenzungsvorrichtung nach einem der Ansprüche 1 bis 11, mit ferner zumindest einer Zwischenschicht (7) zwischen
- der Schaltschicht (4) und der Reflexionsschicht (5); und/oder
- der Reflexionsschicht (5) und einer Trägerstruktur (8),
insbesondere wobei die zumindest eine Zwischenschicht (7) zumindest eines der folgenden Materialien umfasst oder aus einem dieser Materialien besteht:
- Siliziumdioxid (SiO₂),
- Magnesiumoxid (MgO),
- Magnesiumfluorid (MgF₂).

13. Laser-Leistungsbegrenzungsvorrichtung nach einem der Ansprüche 1 bis 12, ausgestaltet zur Leistungsbegrenzung eines für die Laserspektroskopie geeigneten Lasers, insbesondere eines VIS-Lasers oder NIR-Lasers, im Speziellen eines Lasers mit der Wellenlänge von 532 nm, 785 nm oder 1064 nm.

14. Verwendung der Laser-Leistungsbegrenzungsvorrichtung nach einem der Ansprüche 1 bis 12 in einer Laserspektroskopie-Vorrichtung oder für ein Laserspektroskopie-Verfahren.

15. Verfahren zur Leistungsbegrenzung eines Lasers mit folgenden Schritten:
- Bereitstellen einer einen Laserstrahl (2A) emittierenden Laserquelle (9), insbesondere einer eine Pumpdiode umfassenden Laserquelle (9);
- Anordnen einer Leistungsbegrenzungsvorrichtung (1) nach einem der Ansprüche 1 bis 13 im optischen Pfad des von der Laserquelle (9) emittierten Laserstrahls (2A), wobei eine Reflexionseinrichtung (3) der Leistungsbegrenzungsvorrichtung (1) so ausgestaltet ist, dass eine über einer vordefinierten Schwelle liegende Leistung des auf die Reflexionseinrichtung (3) einfallenden Laserstrahls (2A) eine Änderung des Brechungsindexes des Materials in der Schaltschicht (4) der Reflexionseinrichtung (3) bewirkt, und sich so die Leistung des von der Reflexionseinrichtung (3) reflektierten Laserstrahls (2B) gegenüber der Leistung des auf die Reflexionseinrichtung (3) einfallenden Laserstrahls (2A) aufgrund einer verminderten Reflexion durch die Reflexionseinrichtung (3) verringert.

16. Verfahren nach Anspruch 15, wobei der von der Reflexionseinrichtung (3) reflektierte Laserstrahl (2B) zum Zwecke der Laserspektroskopie einem zu untersuchenden Gegenstand (11) zugeführt wird.

## Claims

1. A laser output limiting device (1) comprising a reflecting device (3) arranged in the optical path of a laser beam (2A), in particular a laser beam (2A) of a predefined wavelength, and configured as a stack of layers, wherein the stack of layers comprises
- a switching layer (4) which comprises or consists of a material exhibiting a metal-insulator transition,
- a reflecting layer (5) which is positioned downstream of the switching layer (4) in the optical path of the laser beam (2A), and
- an anti-reflection layer (6) which is arranged upstream of the switching layer (4) in the optical path of the laser beam (2A) and applied to the switching layer (4) and completes the stack of layers,
wherein the reflecting device (3) is configured such that an output of the laser beam (2A) when it is incident upon the reflecting device (3) which exceeds a predefined threshold causes a change in the refractive index of the material in the switching layer (4), and the output of the laser beam (2B) reflected by the reflecting device (3) is thus reduced as compared to the output of the laser beam (2A) when it is incident upon the reflecting device (3) due to reduced reflection by the reflecting device (3).

2. The laser output limiting device according to claim 1, wherein the reflecting device (3) is configured as a stack of multiple layers (4-7) which are arranged one above the other and which contact each other, wherein one or more or all of the layers (4-7) of the reflecting device (3) is/are applied to the respective underlying layer (4-7) by means of a coating process, in particular by means of a process of sputtering.

3. The laser output limiting device according to claim 1 or 2, wherein the reduced reflection by the reflecting device (3) is caused by a phase transition in the material, in particular a transition from a metal state to an insulator state.

4. The laser output limiting device according to any one of claims 1 to 3, wherein the change in the refractive index, in particular the phase transition of the material, is temperature-induced and/or photo-induced.

5. The laser output limiting device according to any one of claims 1 to 4, which is configured such that the change in the refractive index, in particular the phase transition of the material, is caused substantially by the energy introduced into the switching layer (4) by means of the laser beam (2A).

6. The laser output limiting device according to any one of claims 1 to 4, further comprising a heating device (10) which supplies energy to the switching layer (4).

7. The laser output limiting device according to any one of claims 1 to 6, wherein the material is vanadium(IV) oxide (VO₂).

8. The laser output limiting device according to any one of claims 1 to 7, comprising a Bragg mirror which comprises multiple layers featuring the material which alternate with layers featuring at least one other material, the refractive index of which differs from the refractive index of the material and is in particular lower than the refractive index of the material in its metal state, wherein the at least one other material is specifically silicon dioxide (SiO₂) and/or titanium dioxide (TiO₂).

9. The laser output limiting device according to any one of claims 1 to 8, wherein the reflecting layer (5) comprises or consists of at least one metal, in particular:
- aluminium (Al);
- palladium (Pd);
- titanium (Ti);
- silver (Ag);
- gold (Au).

10. The laser output limiting device according to claim 9, wherein the reflecting layer (5) comprises multiple layers (5A, 5B, 5C) of different metals.

11. The laser output limiting device according to any one of claims 1 to 10, wherein the anti-reflection layer (6) comprises or consists of at least one of the following materials:
- silicon dioxide (SiO₂);
- magnesium oxide (MgO);
- magnesium fluoride (MgF₂).

12. The laser output limiting device according to any one of claims 1 to 11, further comprising at least one intermediate layer (7)
- between the switching layer (4) and the reflecting layer (5); and/or
- between the reflecting layer (5) and a carrier structure (8)
wherein the at least one intermediate layer (7) in particular comprises or consists of at least one of the following materials:
- silicon dioxide (SiO₂);
- magnesium oxide (MgO);
- magnesium fluoride (MgF₂).

13. The laser output limiting device according to any one of claims 1 to 12, configured to limit the output of a laser which is suitable for laser spectroscopy, in particular a VIS laser or NIR laser, specifically a laser having a wavelength of 532 nm, 785 nm or 1064 nm.

14. The use of the laser output limiting device according to any one of claims 1 to 13 in a laser spectroscopy device or for a laser spectroscopy method.

15. A method for limiting the output of a laser, comprising the following steps:
- providing a laser source (9) which emits a laser beam (2A), in particular a laser source (9) comprising a pump diode;
- arranging an output limiting device (1) according to any one of claims 1 to 13 in the optical path of the laser beam (2A) emitted by the laser source (9), wherein a reflecting device (3) of the output limiting device (1) is configured such that an output of the laser beam (2A) when it is incident upon the reflecting device (3) which exceeds a predefined threshold causes a change in the refractive index of the material in the switching layer (4) of the reflecting device (3), and the output of the laser beam (2B) reflected by the reflecting device (3) is thus reduced as compared to the output of the laser beam (2A) when it is incident upon the reflecting device (3) due to reduced reflection by the reflecting device (3).

16. The method according to claim 15, wherein the laser beam (2B) reflected by the reflecting device (3) is directed to an object (11) to be examined, for the purpose of laser spectroscopy.

## Revendications

1. Dispositif de limitation de puissance laser (1) pourvu d'un dispositif de réflexion (3) disposé dans le trajet optique d'un rayonnement laser (2A), notamment d'un rayonnement laser (2A) d'une longueur d'onde prédéfinie, qui est conçu comme un empilement en couches, l'empilement en couches comprenant
- une couche de commutation (4) présentant une matière avec une transition métal-isolant ou constituée à base de cette matière
- une couche de réflexion (5) située en aval dans le trajet optique du rayonnement laser (2A) de la couche de commutation (4) et
- une couche anti-réfléchissante (6) en amont dans le trajet optique du rayonnement laser (2A) de la couche de commutation (4), rapportée sur celle-ci et terminant l'empilement en couches,
où le dispositif de réflexion (3) est conçu de telle manière qu'une puissance du rayonnement laser (2A) tombant sur le dispositif de réflexion (3) se situant au-dessus d'un seuil prédéfini provoque une modification de l'indice de réfraction de la matière dans la couche de commutation (4), et qu'ainsi la puissance du rayonnement laser (2B) réfléchi par le dispositif de réflexion (3) diminue par rapport à la puissance du rayonnement laser (2A) tombant sur le dispositif de réflexion (3) en raison d'une réflexion diminuée par le dispositif de réflexion (3).

2. Dispositif de limitation de puissance laser selon la revendication 1, dans lequel le dispositif de réflexion (3) est conçu comme un empilement de plusieurs couches (4 à 7) disposées les unes sur les autres et en contact les unes avec les autres, notamment, où une, plusieurs ou toutes les couches (4 à 7) du dispositif de réflexion (3) sont rapportées au moyen d'un procédé de revêtement sur la couche (4 à 7) se situant respectivement en-dessous, en particulier, au moyen d'un procédé de pulvérisation.

3. Dispositif de limitation de puissance laser selon la revendication 1 ou la revendication 2, dans lequel la réflexion diminuée par le dispositif de réflexion (3) est provoquée par une transition de phases de la matière, notamment par une transition d'un état métallique vers un état isolant.

4. Dispositif de limitation de puissance laser selon l'une des revendications 1 à 3, dans lequel la modification de l'indice de réfraction, notamment la transition de phases de la matière est induite par la température et/ou est photo-induite.

5. Dispositif de limitation de puissance laser selon l'une des revendications 1 à 4, qui est conçu pour que la modification de l'indice de réfraction, notamment la transition de phases de la matière, est essentiellement activée par l'énergie apportée au moyen du rayonnement laser (2A) dans la couche de commutation (4).

6. Dispositif de limitation de puissance laser selon l'une des revendications 1 à 4, pourvue en outre d'un dispositif de chauffage (10), lequel amène de l'énergie à la couche de commutation (4).

7. Dispositif de limitation de puissance laser selon l'une des revendications 1 à 6, dans lequel la matière est de l'oxyde de vanadium (IV) (VO₂).

8. Dispositif de limitation de puissance laser selon l'une des revendications 1 à 7, pourvu d'un miroir de Bragg qui comprend plusieurs couches avec la matière qui alternent avec des couches avec au moins une autre matière dont l'indice de réfraction se différentie de l'indice de réfraction de la matière, est notamment plus faible que l'indice de réfraction de la matière dans l'état métal, où l'au moins une autre matière est en particulier de l'oxyde de silicium (SiO₂) et/ou de l'oxyde de titane (TiO₂).

9. Dispositif de limitation de puissance laser selon l'une des revendications 1 à 8, dans lequel la couche de réflexion (5) comprend au moins un métal ou en est constituée, notamment :
- de l'aluminium (Al) ;
- du palladium (Pd) ;
- du titane (Ti) ;
- de l'argent (Ag) ;
- de l'or (Au).

10. Dispositif de limitation de puissance laser selon la revendication 9, dans lequel la couche de réflexion (5) présente plusieurs couches (5A, 5B, 5C) de métaux différents.

11. Dispositif de limitation de puissance laser selon l'une des revendications 1 à 10, dans lequel la couche anti-réfléchissante (6) comprend au moins une des matières suivantes ou est constituée de ces matières :
- de l'oxyde de silicium (SiO₂),
- de l'oxyde de magnésium (MgO),
- du fluorure de magnésium (MGF₂).

12. Dispositif de limitation de puissance laser selon l'une des revendications 1 à 11, pourvu en outre d'au moins une couche intermédiaire (7) entre
- la couche de commutation (4) et la couche de réflexion (5) ; et/ou
- la couche de réflexion (5) et une structure support (8),
en particulier, où l'au moins une couche intermédiaire (7) comprend au moins l'une des matières suivantes ou est constituée d'une de ces matières :
- de l'oxyde de silicium (SiO₂),
- de l'oxyde de magnésium (MgO),
- du fluorure de magnésium (MgF₂).

13. Dispositif de limitation de puissance laser selon l'une des revendications 1 à 12, conçu pour la limitation de puissance d'un laser approprié pour la spectroscopie laser, notamment d'un laser VIS ou d'un laser NIR, en particulier un laser avec les longueurs d'onde de 532 nm, 785 nm ou 1064 nm.

14. Utilisation du dispositif de limitation de puissance laser selon l'une des revendications 1 à 12 dans un dispositif de spectroscopie laser ou pour un procédé de spectroscopie laser.

15. Procédé de limitation de puissance laser avec les étapes suivantes :
- mise au point d'une source laser (9) émettant un rayonnement laser (2A), notamment une source laser (9) comprenant une pompe diode ;
- disposition d'un dispositif de limitation de puissance (1) selon l'une des revendications 1 à 13 dans le trajet optique du rayonnement laser (2A) émis par la source laser (9), où un dispositif de réflexion (3) du dispositif de limitation de puissance (1) est conçu de sorte qu'une puissance du rayonnement laser (2A) tombant sur le dispositif de réflexion (3) située au-dessus d'un seuil prédéfini provoque une modification de l'indice de réfraction de la matière dans la couche de commutation (4) du dispositif de réflexion (3) et qu'ainsi la puissance du rayonnement laser (2B) réfléchi par le dispositif de réflexion (3) diminue par rapport à la puissance du rayonnement laser (2A) tombant sur le dispositif de réflexion (3) en raison d'une réflexion diminuée par le dispositif de réflexion (3).

16. Procédé selon la revendication 15, dans lequel le rayonnement laser (2B) réfléchi par le dispositif de réflexion (3) est mené vers un objet (11) à analyser dans le cadre de la spectroscopie laser.
